Europäisches Patentamt

European Patent Office

Office européen des brevets

(11) Veröffentlichungsnummer: **0 209 943 B1**

# EUROPÄISCHE PATENTSCHRIFT

(45) Veröffentlichungstag der Patentschrift: **11.11.92**

(51) Int. Cl.⁵: **H02K 7/102**, F16D 59/02

(21) Anmeldenummer: **86201229.1**

(22) Anmeldetag: **15.07.86**

(54) **Elektromotor mit Scheibenbremse.**

(30) Priorität: **26.07.85 CH 3257/85**

(43) Veröffentlichungstag der Anmeldung:
**28.01.87 Patentblatt 87/05**

(45) Bekanntmachung des Hinweises auf die
Patenterteilung:
**11.11.92 Patentblatt 92/46**

(84) Benannte Vertragsstaaten:
**CH DE FR GB IT LI SE**

(56) Entgegenhaltungen:
EP-A- 0 078 944      EP-A- 0 146 783
DE-A- 1 951 892      DE-A- 1 962 406
DE-U- 8 525 585      US-A- 2 077 888
US-A- 2 911 548

(73) Patentinhaber: **Mavilor Systèmes S.A.
c/o INFRANOR S.A. Place de la Gare
CH-1296 Coppet(CH)**

(72) Erfinder: **Casanova, Damien
c/Mutaner 318 Pal. 2
Barcelona (21)(ES)**

(74) Vertreter: **Jörchel, Dietrich R.A. et al
c/o BUGNION S.A. Conseils en Propriété Industrielle 10, route de Florissant Case postale 375
CH-1211 Genève 12 Champel(CH)**

## Beschreibung

Die Erfindung bezieht sich auf einen Elektromotor mit Scheibenbremse gemäss dem Oberbegriff des Patentanspruchs 1.

Ein solcher Elektromotor ist aus der DE-A-1 951 892 bekannt. Die Scheibenbremse dieses Motors arbeitet mit einer die Motorwelle im Abstand umgebenden Schraubenfeder als Einrichtung zur Erzeugung der Bremskraft und mit einem Elektromagneten als Einrichtung zum Lüften der Bremse, wobei der axial bewegliche Anker des Elektromagneten das Andrückteil bildet. Das dem Motor abgewandte Ende der Schraubenfeder liegt an einem die Welle mit Spiel umgebenden hülsenförmigen Bauteil an, an dessen der Feder abgewandten Seite der Anker angeordnet ist. Schraubenfeder und hülsenförmiges Bauteil werden von der Spule des Elektromagneten konzentrisch umgeben. Die Bremsscheibe besteht an ihrer Randzone aus einem kreisringförmigen, das eigentliche Bremsorgan bildenden Bremsscheibenteil, welches über eine Membranfeder mit einer Nabe durch Hohlniete verbunden ist. Diese Nabe sitzt auf der Motorwelle und hat ein Gewindeloch, das zur Aufnahme einer Klemmschraube dient. Die ganze Scheibenbremse ist mit einem am Motorflansch angebrachten Gehäusedeckel abgedeckt, an dessen innerer Stirnseite eine das feststehende Bremsenteil bildende Scheibe mittels Schrauben befestigt ist. Da die Schraubenfeder und das erwähnte hülsenförmige Bauteil zwischen dieser Feder und dem Anker die den Motorflansch durchsetzende Motorwelle mit nur geringem Abstand konzentrisch umgeben, ist der gesamte Innenraum des Gehäusedeckels praktisch vollkommen durch die Teile der Scheibenbremse ausgefüllt. Daher ist auch das bremsenseitige Lager für die Motorwelle in Form eines Kugellagers auf der Innenseite des Motorflanschs, also neben der Scheibenbremse, angeordnet.

Ein anderer bekannter Elektromotor mit Scheibenbremse ist aus der EP-A 0 146 783 bekannt und als Roboter-Stellantrieb mit eingebautem Resolver ausgebildet. Dieser Elektromotor besteht im wesentlichen aus einem ersten feststehenden Gehäuseteil mit einer zentralen hohlen Achse, auf welcher der Stator befestigt ist, aus einem relativ zum ersten Gehäuseteil drehbaren zweiten Gehäuseteil, aus dem Rotor, welcher mit einem Rotorring drehbar auf der hohlen Achse gelagert ist, und aus einer speziellen, zwischen Rotor und zweitem Gehäuseteil installierten Reduktionskupplung. Die Scheibenbremse befindet sich im Innern dieses Elektromotors im Kreisringraum zwischen der hohlen Achse und einer zur erwähnten Reduktionskupplung gehörenden zylindrischen Hülse und ist eine Federdruckbremse, welche durch einen Elektromagneten gelüftet wird. Die aus flexiblem Material bestehende Bremsscheibe ist am Ende des Rotorrings befestigt. Der Elektromagnet hat einen neben der Bremsscheibe am feststehenden Gehäuseteil befestigten, im Querschnitt topfförmigen Statorring, der zur Bremsscheibe hin offen ist, eine innerhalb dieses Statorrings angeordnete Spule und einen das Andrückteil der Bremse bildenden kreisringförmigen Anker. Dieser Anker umgibt die hohle Achse konzentrisch zwischen Statorring und Bremsscheibe, ist drehfest, jedoch axial verschiebbar angeordnet und hat einen radial innen liegenden ringförmigen Abschnitt, der axial vorspringt und von einer Feder beaufschlagt wird, welche im Ringraum zwischen der hohlen Achse und dem Innenumfang des Statorrings montiert ist. Bei nicht erregtem Elektromagneten drückt der Anker unter der Wirkung der Feder eine kreisringförmige Randzone der Bremsscheibe unter elastischer Verformung derselben gegen das feststehende Bremsenteil.

Scheibenbremsen dieser Bauart werden insbesondere als Stillstandsbremsen verwendet, die bei stromloser Magnetspule, also bei abgeschaltetem Elektromotor, ihre Bremsstellung einnehmen, indem der Anker durch die Feder gegen die Bremsscheibe gedrückt wird. Bei Erregung der Magnetspule dagegen wird die Bremse gelüftet, indem die stärkere Magnetkraft den Anker gegen die Wirkung der Feder von der Bremsscheibe zurückzieht. Derartige Stillstandsbremsen sind insbesondere bei Stellmotoren erforderlich, deren Läufer bei abgeschaltetem Motor oder bei Stromausfall in seiner Stellung blockiert werden muss.

Die Scheibenbremse des vorstehend beschriebenen, bekannten Elektromotors ist vollständig im Innern dieses Motors untergebracht und hat einen beträchtlichen Platzbedarf, da sie einen sich von der hohlen Achse radial nach aussen erstreckenden, ziemlich grossen Ringraum einnimmt.

Eine andere, für einen Elektromotor bestimmte Scheibenbremse ist durch die EP-A-0 078 944 bekannt und ebenfalls als elektromagnetisch lüftbare Federdruckbremse ausgebildet, die wiederum vor allem als Stillstandsbremse verwendbar ist. Die Bremsscheibe besteht hierbei, wie auch bei zahlreichen anderen bekannten Scheibenbremsen, aus einer starren, ziemlich schweren und dicken Scheibe, an der ein Bremsbelag befestigt ist, und wird beim Bremsvorgang einseitig vom Andrückteil beaufschlagt, bei dem es sich wiederum um den Anker des Elektromagneten handelt, dessen topfförmiges Magnetgehäuse die Motorwelle konzentrisch umgibt und eine axial bewegliche Ringspule trägt. Diese Ringspule wird durch Federn in Richtung auf den Anker gedruckt, der zwischen Spule und Bremsscheibe axial beweglich angeordnet ist. Die Lagerbuchse für die Motorwelle sitzt in der zentralen Oeffnung des Magnetgehäuses, welches daher die Motorwelle mit nur geringem Abstand umgibt.

Aus der US-A-2 077 888 ist ebenfalls ein Elektromotor mit elektromagnetisch lüftbarer Scheibenbremse in Form einer Federdruckbremse bekannt, bei welcher mehrere, längs eines äusseren Umfangsbereichs der Bremsscheibe verteilte Elektromagnete vorgesehen sind. Hierbei wird die Bremsscheibe in der Bremsstellung durch Federn zwischen einer die Anker der verschiedenen Elektromagnete tragenden, axial verschiebbaren Andruckplatte und einer ein Widerlager bildenden Platte eingeklemmt, welche auf achsenparallelen Zapfen montiert ist, die ihrerseits am Seitenflansch des Motorgehäuses befestigt sind und axial an dessen Innenseite vorstehen. Auch in diesem Falle nimmt die vollständig im Innern des Motorgehäuses installierte Scheibenbremse einen die gesamte radiale Abmessung des Motors ausfüllenden Platz ein.

Die bei den zuletzt beschriebenen bekannten Elektromotoren verwendeten starren, schweren Bremsscheiben sind wegen ihres verhältnismässig grossen Gewichts und daher grossen Trägheitsmoments häufig ungünstig, nämlich dann, wenn sie als Stillstandsbremsen für Stellmotoren verwendet werden, die häufig ein- und ausgeschaltet, insbesondere rasch beschleunigt und gebremst werden müssen. Wenn der Motor auch noch mit hohen Drehzahlen arbeiten muss, dann ist ein grosses Trägheitsmoment der Bremsscheibe besonders ungünstig. Ausserdem ist die notwendige einwandfreie Auswuchtung der schweren Bremsscheibe mühsam und zeitraubend. Ferner ist der zur Unterbringung der Bremse erforderliche Platzbedarf häufig ungünstig, vor allem dann, wenn der Motor mit weiteren Anbauteilen, zum Beispiel einem Tachogenerator und/oder einem Winkelgeber, ausgerüstet werden muss.

Ausgehend von einem Elektromotor mit Scheibenbremse der im Oberbegriff des Anspruchs 1 beschriebenen Art liegt der Erfindung die Aufgabe zugrunde, die Scheibenbremse derart platzsparend unterzubringen, dass sie die Installation von Anbauteilen nicht stört und insbesondere eine kompakate Bauweise ohne grossen Raumbedarf in axialer Richtung erlaubt und dass dabei gleichzeitig der Vorteil einer Bremsscheibe mit nur geringem Trägheitsmoment ohne Beeinträchtigung des Bremsvermögens ausgenutzt wird. Eine derartige Scheibenbremse ist besonders als Stillstandsbremse für Stellmotoren vorteilhaft.

Diese Aufgabe wird erfindungsgemäss durch die im kennzeichnenden Teil des Patentanspruchs 1 angegebenen Merkmale gelöst.

Auf diese Weise ergibt sich der Vorteil, dass der freie Ringraum innerhalb des Gehäusekörpers der Bremse in platzsparender Weise zur Unterbringung eines weiteren Anbauteils, insbesondere eines Tachogenerators und/oder eines Winkelgebers, oder auch eines Kugellagers für die Motorwelle zur Verfügung steht. Gleichzeitig wird der Vorteil der an sich bekannten flexiblen Bremsscheibe ausgenutzt, die besonders dünn ausgebildet werden kann, wodurch ihr Gewicht und ihr Trägheitsmoment sehr klein gehalten werden und ihre Auswuchtung erleichtert wird. Da die Bremskraft durch das kreisringförmige Andrückteil am äusseren Rand der Bremsscheibe wirksam wird, erhält man ein maximales Bremsmoment.

Die Erfindung wird anhand der Zeichnungen am Ausführungsbeispiel eines Elektromotors mit einer elektromagnetisch betätigten Federdruckbremse näher erläutert, welche als Stillstandsbremse fungiert. Es zeigen:

Figur 1 eine Seitenansicht des Motors mit einem Axialschnitt durch die Bremse im gelüfteten Zustand und

Figur 2 den gleichen Axialschnitt im Bremszustand.

Die Scheibenbremse ist seitlich an einem Flansch 1a eines nur schematisch angedeuteten Elektromotors 1 montiert und besteht aus einem die Welle 2 des Motors 1 im Abstand konzentrisch umgebenden Elektromagneten mit einem Anker 8, der das Andrückteil bildet, einer mit Pressitz unverrückbar auf der Welle 2 befestigten Bremsscheibe 12 und einem das äussere Bremsengehäuse bildenden, feststehenden Bremsenteil 13.

Der Elektromagnet hat einen den Stator bildenden, ringförmigen Gehäusekörper 4, der am Motorflansch 1a befestigt und topfförmig ausgebildet ist, wobei die ringförmige Ausnehmung 5 auf der dem Motor 1 abgewandten Seite offen ist. Eine ringförmige Spule 6 mit ihrem Spulenkörper 6a ist axial verschiebbar in der Ausnehmung 5 gelagert und unterliegt der Wirkung von Federn 7 in Form von Schraubenfedern. Dabei handelt es sich um Druckfedern, die, gleichmässig längs des Umfangs des Stators 4 verteilt, in der Ausnehmung 5 liegen und sich einerseits am Boden dieser Ausnehmung 5 und andererseits an der Innenseite des Spulenkörpers 6a der Spule 6 abstützen. Zwischen dem Stator 4 mit seiner Spule 6 und der Bremsscheibe 12 ist drehfest, jedoch axial verschiebbar der das Andrückteil bildende ringförmige Anker 8 gelagert, der die Welle 2 mit Abstand umgibt. Um eine Drehung des Ankers 8 zu verhindern, sind an ihm, über seinen Umfang verteilt, einige axial gerichtete Stifte 10 befestigt, welche in entsprechende Oeffnungen 11 des Stators 4 frei verschiebbar eingreifen. Das feststehende Bremsenteil 13, welches ein die Bremse mit ihrem Elektromagneten abdeckendes Bremsengehäuse bildet, ist mittels Schrauben 15 am Motorflansch 1a befestigt.

Auf ihren der Bremsscheibe 12 zugewandten Seiten tragen der Anker 8 und das feststehende Bremsenteil 13 kreisringförmige Bremsbeläge 9 und 14, welche einer kreisringförmigen Randzone 12a der Bremsscheibe 12 gegenüberliegen. Die Bremsscheibe 12 besteht aus elastisch biegsamem Federstahl und hat eine Dicke von nur beispielsweise 0,15 bis 0,30 mm, vorzugsweise von etwa 0,20 mm. Ihr Durchmesser ist der Motorgrösse angepasst und beträgt im betrachteten Beispiel ungefähr 16 cm. Bis zu einem Aussendurchmesser von etwa 20 cm kann die Bremsscheibe 12 die erwähnte bevorzugte Dicke von etwa 0.2 mm haben; bei Durchmessern von 20 cm bis 30 cm und darüber kann diese Dicke entsprechend grösser gewählt werden und zum Beispiel ungefähr 0.3 mm betragen.

Die Luftspalte zwischen der Bremsscheibe 12 und dem Bremsbelag 9 des Ankers 8 einerseits und dem Bremsbelag 14 des Bremsenteils 13 andererseits betragen im gelüfteten Zustand jeweils etwa 0,2 mm, so dass die Randzone 12a der Bremsscheibe 12 beim Bremsen um etwa 0,2 mm verschoben wird.

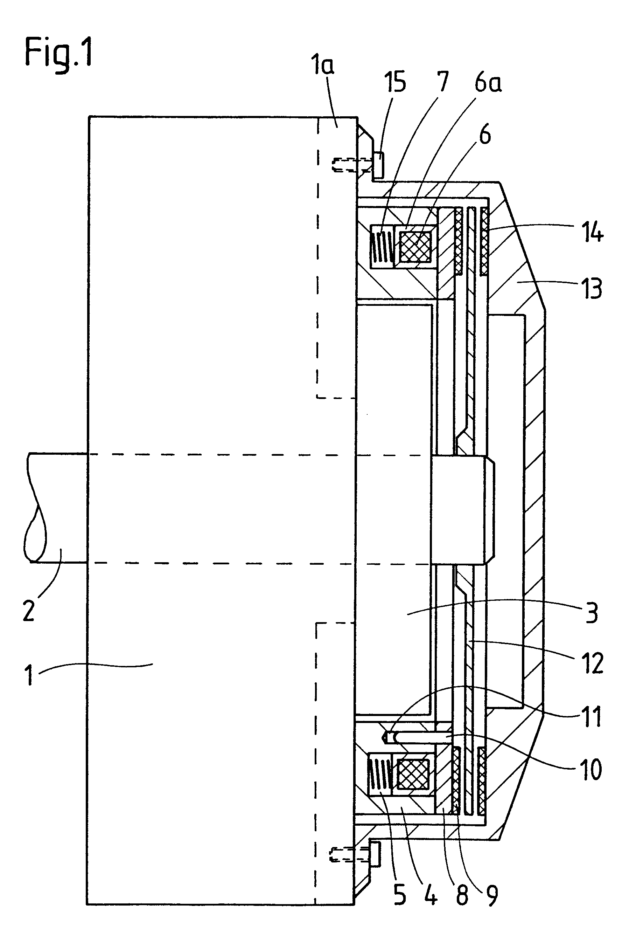

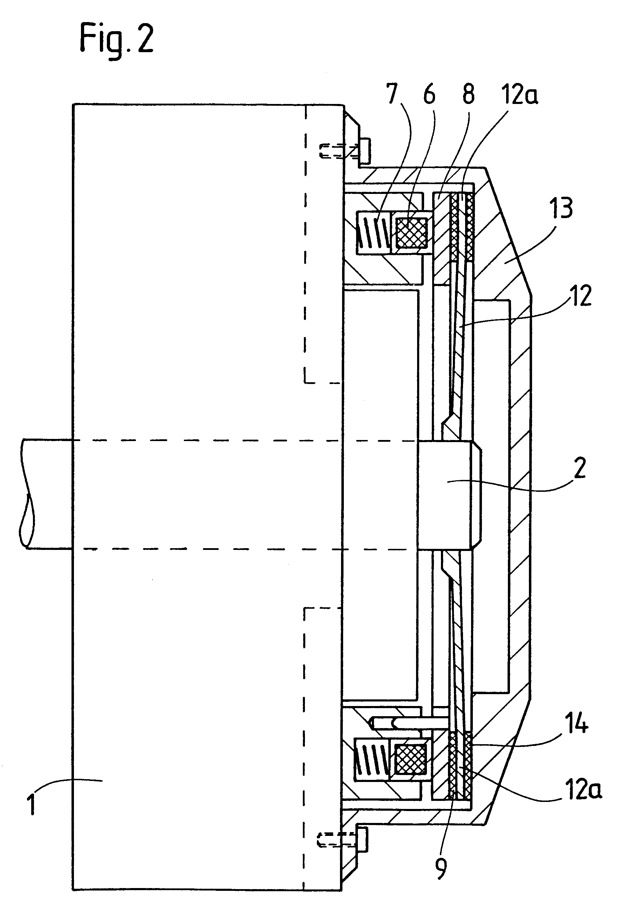

Hinsichtlich der Dicke der Bremsscheibe 12 und der erwähnten Luftspalte, welche aus Gründen der Deutlichkeit der Darstellung in den Figuren 1 und 2 übertrieben gross dargestellt wurden, sind die Figuren 1 und 2 nicht masstabsgerecht.

Der freie, vom Stator 4 des Elektromagneten begrenzte Ringraum ist verhältnismässig gross, da ja der Durchmesser des ringförmigen Stators 4 nur wenig kleiner als der Durchmesser des Elektromotors und seine radiale Abmessung verhältnismässig klein gewählt werden können. Daher kann dieser innere Ringraum, dessen Durchmesser vorzugsweise wenigstens so gross wie der halbe Motordurchmesser ist, zur Unterbringung eines weiteren, am Motorflansch 1a installierten Anbauteils 3 ausgenutzt werden, beispielsweise eines Tachogenerators und/oder eines Winkelgebers, wodurch eine besonders raumsparende, kompakte Bauweise erzielt wird. In diesem Ringraum kann jedoch auch ein ausserhalb des Flansches 1a angeordnetes Lager, insbesondere Kugellager, für die Welle 2 des Motors 1 montiert werden, wodurch der axiale Abstand zwischen den beiden, die Welle 2 tragenden Lagern vergrössert und damit die Kippstabilität des Motorläufers verbessert wird.

Figur 1 zeigt die Scheibenbremse im gelüfteten Zustand, den sie einnimmt, wenn der Motor eingeschaltet und damit die Spule 6 erregt ist. In diesem Zustand zieht die Magnetkraft, welche die Kraft der Federn 7 überwiegt, den Anker 8 bis zur Anlage am Stator 4 zurück, wobei die axial bewegliche Spule 6 mit ihrem Spulenkörper 6a gegen die Wirkung der Federn 7 in die Ausnehmung 5 eingedrückt und die Bremsscheibe 12 freigegeben wird. In diesem nicht beaufschlagten und nicht verformten Zustand befindet sich die Bremsscheibe 12 im axialen Abstand sowohl vom Bremsbelag 9 auf dem Anker 8 als auch vom Bremsbelag 14 an der Innenseite des feststehenden Bremsenteils 13 und kann sich frei mit der Welle 2 drehen.

Figur 2 zeigt den Bremszustand der Bremse, den sie einnimmt, wenn der Motor abgeschaltet ist oder der Strom ausfällt und damit die Spule 6 stromlos ist. In diesem Zustand drücken die Federn 7 die Spule 6 mit ihrem Spulenkörper 6a axial nach aussen gegen den Anker 8, welcher die kreisringförmige Randzone 12a der Bremsscheibe 12 unter elastischer Verformung dieser Bremsscheibe gegen das feststehende Bremsenteil 13 presst, wodurch also die Bremsscheibe mit ihrer Randzone 12a fest zwischen die beiden Bremsbelege 9 und 14 eingeklemmt wird. Aufgrund dieser beidseitigen Beaufschlagung der Bremsscheibe 12 und des Umstands, dass die Bremskraft am äusseren Rand der Bremsscheibe 12 angreift, wird ein maximales Bremsmoment erzielt. Sobald die Bremsscheibe beim Lüften der Bremse freigegeben wird, nimmt sie aufgrund ihrer Eigenelastizität wieder ihre in Figur 1 gezeigte unverformte Gestalt an.

Aufgrund ihres nur geringen Trägheitsmoments erfordert ihre Beschleunigung und ihre Abbremsung keine ins Gewicht fallenden zusätzlichen Motorkräfte, so dass die Scheibenbremse nach der Erfindung insbesondere für häufig ein- und ausgeschaltete Stellmotoren geeignet ist. Da sie axial unverrückbar auf der Melle 2 sitzt, ist auch eine spielfreie Blockierung der Motorwelle im Stillstand garantiert.

Die Erfindung ist nicht auf die beschriebene Ausführungsform beschränkt, sondern lässt hinsichtlich ihrer konstruktiven Ausbildung mannigfache Varianten zu; insbesondere können anstelle einer Ringspule 6 mehrere, gleichmässig längs des Umfanges des Stators 4 verteilte, getrennte Spulen vorgesehen sein, beispielsweise drei Spulen.

Ferner können die Bremskraft und/oder die Kraft zum Lüften der Bremse auf andere Weise als durch Federn bzw. durch elektromagnetische Kräfte erzeugt werden, beispielsweise durch druckmittelbetätigte Zylinder-Kolben-Einheiten. In diesem Falle sind zum Beispiel in den Ausnehmungen 5 des Gehäusekörpers 4 anstelle der Federn und Spulen pneumatisch oder hydraulisch betätigte, doppeltwirkende Kolben untergebracht, welche auf ein dem Anker 8 entsprechendes Andrückteil wirken und beispielsweise an diesem angelenkt sind.

## Patentansprüche

1. Elektromotor mit seitlich an einem Flansch (1a) des Motors angeordneter Scheibenbremse, bestehend aus einer auf der Motorwelle (2) unverrückbar befestigten, elastisch biegsamen Bremsscheibe (12), einem der Bremsscheibe (12) auf der dem Motor zugewandten Seite gegenüberliegenden, kreisringförmigen Andrückteil (8), das drehfest, jedoch axial verschiebbar angeordnet ist, einem feststehenden Bremsenteil (13), das auf der dem Andrückteil (8) abgewandten Seite der Bremsscheibe (12) montiert ist, einer Einrichtung (7) zur Erzeugung der Bremskraft, unter deren Wirkung das Andrückteil (8) eine kreisringförmige Randzone (12a) der Bremsscheibe (12) unter elastischer Verformung derselben gegen das feststehende Bremsenteil (13) presst, und einer Einrichtung (6) zum Lüften der Bremse, durch welche das Andrückteil (8) von der Bremsscheibe (12) abgerückt wird, wobei die Einrichtungen (6, 7) zur Erzeugung der Bremskraft und zum Lüften der Bremse sowie das Andrückteil (8) die den Flansch (1a) des Motors durchsetzende Motorwelle (2) konzentrisch umgeben, dadurch gekennzeichnet dass die Einrichtungen (6, 7) zum Erzeugen der Bremskraft und zum Lüften der Bremse in einem kreisringförmigen Gehäusekörper (4) untergebracht sind, dass dieser Gehäusekörper (4) und das Andrückteil (8) um die Motorwelle (2) einen freien Ringraum bilden, dessen Durchmesser wenigstens so gross ist wie der halbe Durchmesser des Elektromotors (1) und welcher Platz für ein weiteres Anbauteil (3), insbesondere einen Tachogenerator und/oder einen Winkelgeber, oder für eine die Motorwelle (2) tragendes Lager, insbesondere ein Kugellager, bietet, und dass die Bremsscheibe (12) einteilig ausgebildet ist.

2. Elektromotor nach Anspruch 1, dadurch gekennzeichnet, dass die Bremsscheibe (12) aus Federstahl besteht und eine Dicke zwischen 0,15 und 0,30 mm, vorzugsweise von 0,20 mm, aufweist.

3. Elektromotor nach einem der Ansprüche 1 oder 2 mit einer angebauten Scheibenbremse in Form einer durch einen Elektromagneten lüftbaren Federdruckbremse, wobei der Gehäusekörper (4) den Stator des Elektromagneten bildet, dadurch gekennzeichnet, dass der Elektromagnet mehrere getrennte, längs des Umfangs seines Stators (4) verteilte Spulen (6) aufweist.

4. Elektromotor nach einem der Ansprüche 1 bis 3, dadurch gekennzeichnet, dass das feststehende Bremsenteil (13) durch ein die Bremsscheibe (12) und die Einrichtungen (6, 7) zur Erzeugung der Bremskraft und zum Lüften der Bremse abdeckendes topfförmiges Gehäuseteil gebildet wird.

**Claims**

1. An electric motor with disk brake mounted on the side of a motor flange (1a) and consisting of an elastically flexible brake disk (12) immovably secured on the motor shaft (2), an annular pressing part (8) opposite the brake disk (12) on the side facing the motor, and arranged rotationally fixed but axially movable, a stationary brake part (13) fitted on the side of the brake disk (12) facing away from the pressing part (8), a device (7) for generation of the braking force, by which the pressing part (8) presses an annular rim zone (12a) of the brake disk (12), with elastic deformation of the same, against the stationary brake part (13), and a device (6) for easing of the brake, by which the pressing part (8) is moved away from the brake disk (12), the devices (6, 7) for generation of the braking force and for easing of the brake, and the pressing part (8) concentrically surrounding the motor shaft (2) which traverses the motor flange (1a), characterized in that said devices (6, 7) for generation of the braking force and for easing of the brake are accomodated in an annular housing frame (4), in that this housing frame (4) and the pressing part (8) form around the motor shaft (2) a free annular space, the diameter of which is at least as large as half the diameter of the electric motor (1) and which offers room for a further attaching part (3), in particular a tachometer generator and/or a phase-angle sensor, or for a bearing, in particular a ball bearing, carrying the motor shaft (2), and in that the brake disk (12) is made in one piece.

2. An electric motor according to claim 1, characterized in that the brake disk (12) consists of spring steel and has a thickness between 0,15 and 0,30 mm, preferably of 0,20 mm.

3. An electric motor according to one of claims 1 or 2, with attached disk brake in the form of a spring-loaded brake which can be eased by an electromagnet, wherein the housing frame (4) forms the stator of the electromagnet, characterized in that the electromagnet has several separate coils (6) distributed along the periphery of the stator (4).

4. An electric motor according to one of claims 1 to 3, characterized in that the stationary brake part (13) is formed by a pot-shaped housing part covering the brake disk (12) and the devices (6, 7) for generation of the brake force and for easing of the brake.

**Revendications**

**1.** Moteur électrique équipé d'un frein à disque monté sur le côté d'un flasque (1a) du moteur et comprenant un disque de frein (12), flexible élastiquement, fixé inamoviblement sur l'arbre (2) du moteur, une pièce de pression (8) annulaire opposée au disque de frein (12) sur le côté faisant face au moteur, et disposée fixe en rotation mais déplaçable axialement, une partie fixe de frein (13) ajustée du côté du disque de frein (12) à l'opposé de la pièce de pression (8), un dispositif (7) pour engendrer la force de freinage, au moyen duquel la pièce de pression (8) presse une zone du bord annulaire (12a) du disque de frein (12), par une déformation élastiqe de celui-ci, contre la partie fixe du frein (13), et un dispositif (6) pour relâcher le frein au moyen duquel la pièce de pression (8) est éloignée du disque de frein (12), les dispositifs (6,7) pour engendrer la force de freinage et pour relâcher le frein, et la pièce de pression (8) entourant concentriquement l'arbre du moteur (2) qui traverse le flasque (1a) du moteur, caractérisé en ce que lesdits dispositifs (6, 7) pour engendrer la force de freinage et pour relâcher le frein sont arrangés dans une structure de bâti annulaire (4), en ce que cette structure de bâti (4) et la pièce de pression (8) forment autour de l'arbre du moteur (2) un espace annulaire libre, dont le diamètre est au moins aussi grand que la moitié du diamètre du moteur électrique (1) et qui offre un espace pour une autre partie associée (3), en particulier une dynamo tachymétrique et/ou un codeur angulaire ou pour un palier, en particulier un palier à billes, portant l'arbre du moteur (2) et en ce que le disque de frein (12) est fait d'une seule pièce.

**2.** Moteur électrique selon la revendication 1, caractérisé en ce que le disque de frein (12) est en acier à ressort et a une épaisseur comprise entre 0,15 et 0,30 mm, préférablement de 0,20 mm.

**3.** Moteur électrique selon l'une des revendications 1 ou 2, associé à un frein à disque formé par un frein à ressort qui eut être relâché par un électro-aimant, dans lequel la structure de bâti (4) forme le stator de l'électro-aimant, caractérisé en ce que l'électro-aimant a plusieurs bobines séparées (6) réparties à la périphérie du stator (4).

**4.** Moteur électrique selon l'une des revendications 1 à 3, caractérisé en ce que la partie fixe du frein (13) est constituée par un bâti de frein en forme de calotte recouvrant le disque de frein (12) et les dispositifs (6, 7) pour engendrer la force de freinage et pour relâcher le frein.

Fig.1

Fig. 2